# EUROPEAN PATENT APPLICATION

(11) **EP 4 481 328 A1**
(43) Date of publication of application: **25.12.2024**
(21) Application number: 23192630.4
(22) Date of filing: 22.08.2023
(51) Int. Cl.: G01C 21/00, G01C 21/20, G06T 7/11, G06V 20/56, G06V 20/70

(54) **METHOD FOR LOCALIZATION OF AN EGO-VEHICLE**

(30) Priority: 23.06.2023 EP 23181271
(71) Applicant: Continental Autonomous Mobility Germany GmbH, 85057 Ingolstadt (DE)
(72) Inventor: Kastantin, Firas, 90411 Nürnberg (DE); Dr. Szirmai, Gergely Zsolt, 90411 Nürnberg (DE); Brand, Christoph, 90411 Nürnberg (DE); Natoli, Alice, 90411 Nürnberg (DE); Seitz, Julien, 90411 Nürnberg (DE)
(74) Representative: Continental Corporation

(57) **Abstract**

The invention relates to a method for localizing an ego-vehicle (Ev) in a map comprising the following steps:
- Receiving (S1) a global semantic map for an environment of the ego-vehicle (Ev)
- Capturing (S2) the surroundings of the ego-vehicle (Ev) by means of at least one environmental sensor generating semantic sensor data;
- Matching (S3) the generated semantic sensor data with the received global semantic map;
- Estimating (S4) the position of the ego-vehicle (Ev) based on the result of the matching.

## Description

The invention relates to a method for localizing an ego-vehicle in a map.

From the state of the art several methods that rely solely on camera based landmark detections are known. These methods are usually referred to as visual localization. One of the most traditional methods of visual localization uses feature points generated from camera images. The feature points are carefully selected points of the image, chosen in a way to be as universal as possible, i.e., they can be found later too and also from a somewhat different point of views and with a slightly different lighting condition. Such feature points can be, for example, corners of some objects where colors and intensities change suddenly or drastically in both directions. These features are stored together with the information context helping to find them later on . This extra information is called the descriptor of the feature point. These fetaures are either computed with classical computer vision descriptors, like SIFT, ORB, etc., or some convolutional neural network assisted feature extractors like Superpoint. The generated features and descriptors are stored in a database which is referred to as a map. On a later occasion, the feature points generated from the actual images are registered with the map and thus the new pose of the vehicle can be estimated. Another recent method is building a data-association graph form sequences of classical HOG features to achieve robust localization.

In the second method, a 3-dimensional (3d) reconstruction of the environment is done with the help of either a stereo camera pair, or structure from motion (SfM) depth estimation. These reconstructed points are then stored in a 3d map of the environment. Usually, some additional information is also stored with the points 3d coordinates: either feature descriptors or semantic information coming from a semantic segmentation convolutional network.

The method closest to the herewith presented approach is the one presented in the papers Tong Qin et al. "AVP-SLAM: Semantic Visual Mapping and Localization for Autonomous Vehicles in the Parking Lot". In: 2020 IEEE/RSJ International Conference on Intelligent Robots and Systems (IROS). IEEE. 2020, pp. 5939-5945 and Tong Qin et al. "A light-weight semantic map for visual localization towards autonomous driving". In: 2021 IEEE International Conference on Robotics and Automation (ICRA). IEEE. 2021, pp. 11248-11254. There, the authors use a three-step process, in which the first step corresponds to map recording with sensor-heavy vehicles; the sensors include at least a front camera and a DGPS device, but other sensors such as lidar and radar my also contribute. The recorded map is then forwarded to central infrastructure site for post processing. In the third step the post processed map is distributed among the less sensor equipped vehicles, which can match their camera images to the map with an iterative closest point approach.

It is therefore an object of the present invention to propose a method for localizing an ego-vehicle in a map which enables a precise and robust localization without performance losses.

This object is solved by the independent claim 1. Further preferred embodiments are subject matter of the dependent claims.

In the field of autonomous mobility, self-driving cars and in robotics in general, localization is one of the most important tasks and also one of the main challenges. In more complex autonomous tasks, a detailed route has to be planned and the pose of the robot or vehicle (in the following named vehicle) has to be known throughout the full mission. In the following, by localization the knowledge of the pose of the vehicle with respect to a certain reference point stored on a map that also contains locations of landmark points is meant. These stored landmark points are selected in a way to be easily detected in the real world by the sensors of the vehicle and also be sufficiently discriminative. In the presented subject of the invention these sensors may be cameras, radars, lidars or even ultrasonic sensors. The accurate matching of these landmarks to their stored counterparts on the map is done with the localization method. A primary sensor of interest in the automotive industry are surround view cameras due to their relatively low price and high information density.

The main difficulty with localization methods that are relying mostly on visual information is that the visual input may change drastically even from slight differences in the environment. Namely, lighting conditions change from day to night and from season to season. Also, some visual features present during summer may completely be missing during winter: Snow can cover some part of the ground and hide eventual features, or some vegetation may look completely different in winter than during summer. Also, different viewing angles of a given landmark may produce completely different visual appearance. In self-driving applications we need a robust localization method free from performance losses due to both short- and long-time variations of the environment.

In order to be able to precisely recall the vehicle pose regardless of the variations of lighting conditions, weather and season changes and possible occlusions and minor changes of the scene, a method should be employed which is closer to how humans navigate and localize.

According to the invention, a method is therefore proposed for localizing an ego-vehicle (Ev) in a map comprising the following steps:
- Receiving a global semantic map for an environment of the ego-vehicle (Ev)
- Capturing the surroundings of the ego-vehicle (Ev) by means of at least one environmental sensor generating semantic sensor data;
- Matching the generated semantic sensor data with the received global semantic map;
- Estimating the position of the ego-vehicle (Ev) based on the result of the matching.

At least one of the environmental sensors is preferably a camera, in particular a surround view camera system. However, also other sensor types can be used in addition to the camera, like a radar and/or a lidar sensor. With the latest technics e.g. using AI, semantic classes can be extracted even from radar sensors. And the very same approach can be used.

A human-readable, two-dimensional bird-eye-view map of the surroundings containing semantic information shall be used as the global semantic map. The semantic information include top-view outlines of buildings, areas of vegetation, roads, curbstones, sidewalks, or similar.

The global semantic map is then used in a Monte Carlo localization framework, also known as particle filter, where current detections are scan matched to the map and the vehicle pose is determined recursively by estimating the probability distribution of the vehicle position and orientation. The detections may or may not be from the same semantic-segmentation network that was used for the map creation, but we need to be able to map semantic classes of the detections to the semantic classes stored on the map. Again, either a projective reference frame e.g.using flat-world assumption or a more sophisticated 3D ground plane estimation is used to map the specific semantic class areas of the image to the corresponding domains on the ground. In the case of a third-party map, there is of course no guarantee that the same neural network has been used or even whether the same classes exist on the map. In this case, a mapping between the semantic classes used on the map and those of the detections must be provided

In a further preferred embodiment the global semantic map is received from an internal or external database. The internal database is located in the ego-vehicle. When the global semantic map is received from the internal database, the ego-vehicle has driven the same route before to generate the global semantic map. When received from an external database, the map could be generated by another vehicle or multiple vehicles and stored in a central database and distributed to the ego-vehicle. The external database could also be a third-party vendor and the map can then be provided e.g. by the internet.

In a preferred embodiment boundaries of detected objects are matched to the global map during the matching of the generated semantic sensor data with the received global semantic map.

In a further preferred embodiment the global semantic map is generated with the following steps:
- Capturing the environment of a vehicle by means of at least one environmental sensor generating semantic sensor data;
- Creating a first local semantic map around the vehicle based on the semantic sensor data;
- Creating a further local semantic map around the vehicle based on the semantic sensor data;
- Fusing the first and the further local semantic map to generate a global semantic map;
- Determine boundaries between different semantic classes in the global semantic map.

The vehicle that is used here can be the ego-vehicle that locates itself in the map. If this is the case, the ego-vehicle captures the environment when driving in the specific environment for the first time. When the ego-vehicle drives again in the same environment at a later time, it can localize itself without creating the map again. The vehicle could also be vehicle different from the ego-vehicle. If the vehicle is different to the ego-vehicle the map can be generated in the vehicle and later either sent to a external database or directly to the ego-vehicle or in general vehicles in the same area as the vehicle generating the map. When generating the map in a vehicle, either the ego-vehicle or another vehicle, directly based on the sensor data the mapping into birds-eye-view is done with the help of modelling the ground surface, e.g. with a height profile map. The easiest way is to model the ground with a plane at height 0. This model is usually sufficient indoors in a single story parking house. More sophisticated ground model needs to be used outdoors and in multi-level parking places.

The further semantic map is created after a certain amount of time and/or after the vehicle has moved a certain distance. The first local semantic map is limited by the perception range of the used sensors. When the vehicle has moved a certain distance then the sensors generate new sensor data within their perception range. The first and the further semantic map overlap to a certain extent and are then fused with each other to generate the global semantic map.

The term boundaries comprises e.g. extended objects like lane markings or roads, road boundaries or the like.

It is further preferred that further semantic maps are created continuously. This means that during the movement of the respective vehicle the environment is captured continuously and multiple local semantic maps are created with the respective semantic sensor data.

The map that is used, the global semantic map and also the local semantic map, is preferably a grid-based map containing the semantic occupancy information with 10 cm cell size (but can be any arbitrary cell size). The mapping is not limited to occupancy grid maps. An object based (non-grid) map is equally possible. The only important property is that the map contains semantic information. To estimate the position of the ego-vehicle during mapping, any kind of odometry can be used. For instance, a fusion of the IMU and wheel ticks can be used. Also, the odometry can be extended using radar and lidar sensors. Furthermore, a Monte Carlo pose correction to compensate for the drift in the odometry can be used. This allows to create consistent maps of the environment.

In a further preferred embodiment only object contours are marked on the map which are on the ground. After the semantic detections are mapped to the ground a ray e.g. from a camera is started and traced while only drivable area or ground is detected. The first obstacle that is hit with the ray, which may be elevated from the ground, terminates the ray and everything behind this point is considered to be occluded. In this way only object contours are marked on the map, which are on the ground. This method is the generalization of the inverse perspective mapping applicable also in non-flat areas and to objects which are elevated from the ground.

The obtained and mapped semantic class is then fused into the map. A Bayesian recursive state estimation is used to determine the final class on the map by combining the different sensor readings and also readings from the past. Here, an equivalent Dempster-Shafer fusion can be used instead of the Bayesian rule.

Importantly, this map is created online, during driving and doesn't need post-processing at all. Nevertheless, a post-processing optimization is possible or third party map created offline can also be used.

In a preferred embodiment a particle filter is used for matching the sensor data. In other words, the map is then used in a Monte Carlo localization framework, also known as particle filter, where current detections are scan matched to the map and the vehicle pose is determined recursively by estimating the probability distribution of the vehicle position and orientation. The detections may or may not be from the same semantic-segmentation network that was used for the map creation, but we need to be able to map semantic classes of the detections to the semantic classes stored on the map. Again, either the flat-world assumption or a more sophisticated ground plane estimation is used to map the specific semantic class areas of the image to the corresponding domains on the ground. In the case of a third-party map, there is of course no guarantee that the same neural network has been used or even whether the same classes exist on the map. In this case, a mapping between the semantic classes used on the map and those of the detections must be provided.

There is a difficulty with objects extending on a larger area on the ground, such as vegetation, buildings, or sidewalks. In the case of these objects, we may receive points from the entire bulk of the object, and they may come from anywhere inside the corresponding area. This results in a rather shallow score function during scan matching. Namely, many hypothetic poses of the vehicle (represented by particles) can get similar scores, even though they are not close to the real (ground truth) pose. This ends up in very poor localization performance.

The solution presented herewith is to extract the boundaries of the extended objects and only match the boundaries to the corresponding boundaries on the map. To be more specific, when converting the mapping the semantic segmentation image into the ground, only pixels of a certain class are kept if, (i) they are located in the boundary of the given class to some other class, and (ii) are sufficiently far away from another pixel of the same class. Condition (i) is achieved by using a standard edge detection filter, like the Sobel operator. Condition (ii) is implemented by an NMS filter and is used to reduce the number of detections to the most informative ones.

In summary the invention provides the following benefits:
The usage of purely semantic information in online map creation and localization. The map is completely human-readable and contains clearly distinguishable object types. Furthermore, objects extending to larger areas are used in a way, where the boundaries and corners of the objects are used as landmarks instead of the whole bulk.

Semantic segmentation classified camera images to a bird-eye-view map are mapped using a possibly non-flat ground surface estimation. Only those obstacles are mapped, which are in direct contact with the drivable area visible form the vehicles point of view. Furthermore, only those parts of these objects are mapped which are directly neighboring the ground surface on the image. Other parts of the object and other areas are considered as occluded and not fused to the map. Map fusion is done with Bayesian recursive state estimation from the different sensors and also from different time frames. Odometry with pose correction is used to map the obstacles into global coordinates. A GNSS sensor is used to georeference the map.

The benefits of the proposed method compared to the other methods lies in the following
1. robustness
2. easier to generalize
3. precise discrimination
4. low-level representation: multivariate semantic top-view representation
5. low sensor requirements (standard surround view camera is sufficient)

Further preferred embodiments are subject matter of the figures. Therein shows:
Fig. 1 a schematic example of a semantic map according to an embodiment of the invention;
Fig. 2 a schematic example of a scan-matching scenario according to an embodiment of the invention;
Fig. 3 a schematic flow chart of the method according to an embodiment of the invention.

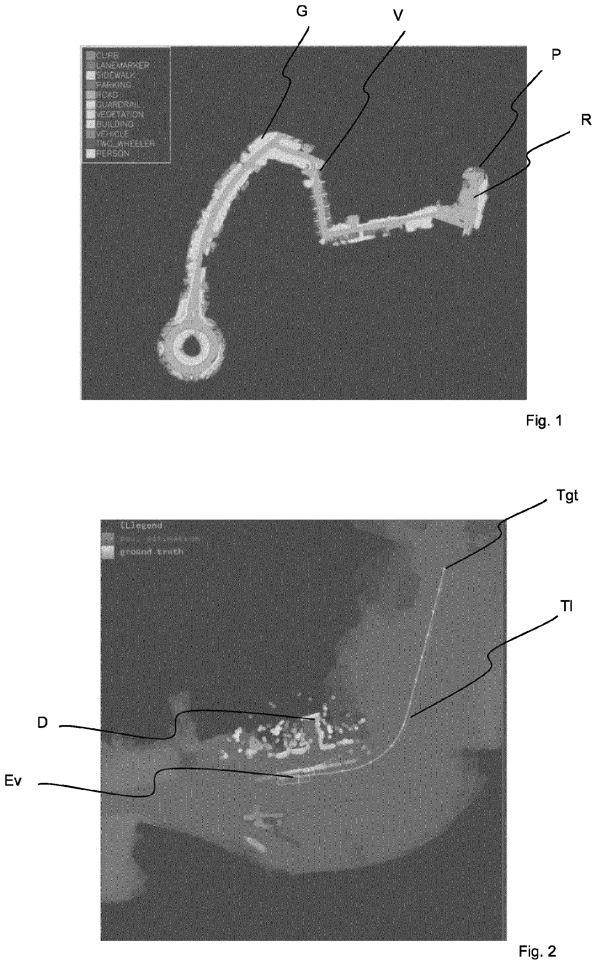

Figure 1 shows a schematic example of a semantic map according to an embodiment of the invention. In this example several semantic classes can be seen. For example the map comprises a class for vegetation G, a class for other vehicles V, a class for parking spots P and a class for the road R. Other classes can also be possible if they occur like classes for curb stones, lane markings, sidewalks, guardrails, buildings, two-wheelers and persons.

Figure 2 shows a schematic example of a scan-matching scenario according to an embodiment of the invention. In this figure several current detections D, which come from the semantic segmentation network, are shown, which are represented by circles. Also, different trajectories of the ego-vehicle Ev are shown. The trajectory Tgt corresponds to the ground truth trajectory recorded with a dGPS device. The trajectory Tl is the result of localization in the map.

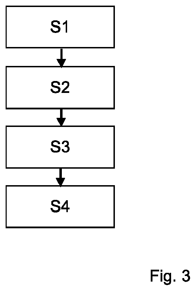

Figure 3 shows a schematic flow chart of the method according to an embodiment of the invention. In step S1 a global semantic map for an environment of the ego-vehicle (Ev) is received. In step S2 the surroundings of the ego-vehicle (Ev) are captured by means of at least one environmental sensor that generates semantic sensor data. In step S3, the generated semantic sensor data is matched with the received global semantic map. In step S4 the position of the ego-vehicle (Ev) is estimated based on the result of the matching.

### Reference numerals

- D: Detections
- G: Semantic class for vegetation
- Ev: Ego-vehicle
- P: Semantic class for Parking spots
- R: Semantic class for Road
- S1-S4: Method steps
- Tgt: Trajectory based on ground truth
- Tl: Trajectory based on localization
- V: Semantic class for other vehicles

## Claims

1. Method for localizing an ego-vehicle (Ev) in a map comprising the following steps:
- Receiving (S1) a global semantic map for an environment of the ego-vehicle (Ev)
- Capturing (S2) the surroundings of the ego-vehicle (Ev) by means of at least one environmental sensor generating semantic sensor data;
- Matching (S3) the generated semantic sensor data with the received global semantic map;
- Estimating (S4) the position of the ego-vehicle (Ev) based on the result of the matching.

2. Method according to claim 1,
**characterized in that**
the semantic map is received from an internal or external database.

3. Method according to claim 1,
**characterized in that**,
boundaries of detected objects are matched to the global map during the matching of the generated semantic sensor data with the received global semantic map.

4. Method according to any of claims 1 -3 ,
**characterized in that**,
the global semantic map is generated with the following steps:
- Capturing the environment of a vehicle by means of at least one environmental sensor generating semantic sensor data;
- Creating a first local semantic map around the vehicle based on the semantic sensor data;
- Creating a further local semantic map around the vehicle based on the semantic sensor data;
- Fusing the first and the further local semantic map to generate a global semantic map;
- Determine boundaries between different semantic classes in the global semantic map.

5. Method according to claim 4,
**characterized in that**,
further semantic maps are created continuously.

6. Method according to claim 3,
**characterized in that**,
when generating the local semantic map the mapping into birds-eye-view is done by modelling the ground surface.

7. Method according to claim 6,
**characterized in that**,
only object contours are marked on the map which are on the ground.

8. Method according to claims 6 and 7,
**characterized in that**
when mapping the generated map into birds-eye-view only certain semantic classes are kept.

9. Method according to claim 1,
**characterized in that**,
for matching the sensor data a particle filter, or a Kalman filter, or a graph based approach is used.
